(19) Europäisches Patentamt
European Patent Office
Office européen des brevets

(11) **EP 3 152 554 B1**

(12) **EUROPEAN PATENT SPECIFICATION**

(45) Date of publication and mention
of the grant of the patent:
**24.07.2019 Bulletin 2019/30**

(51) Int Cl.:
*H01J 35/08* (2006.01)      *G01N 23/06* (2018.01)
*G21K 1/06* (2006.01)

(21) Application number: **15803316.7**

(22) Date of filing: **03.03.2015**

(86) International application number:
**PCT/US2015/018553**

(87) International publication number:
**WO 2015/187219 (10.12.2015 Gazette 2015/49)**

(54) **X-RAY ABSORPTION MEASUREMENT SYSTEM**

RÖNTGENABSORPTIONSMESSSYSTEM

SYSTÈME DE MESURE D'ABSORPTION DES RAYONS X

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.06.2014  US 201462008856 P
21.08.2014  US 201414465816
19.09.2014  US 201414490672
01.12.2014  US 201462086132 P
05.12.2014  US 201414544191
17.02.2015  US 201562117062 P**

(43) Date of publication of application:
**12.04.2017 Bulletin 2017/15**

(73) Proprietor: **Sigray Inc.
Concord, CA 94520 (US)**

(72) Inventors:
• **LEWIS, Sylvia, Jia, Yun
  San Francisco, CA 94103 (US)**
• **YUN, Wenbing
  Walnut Creek, CA 94595 (US)**
• **KIRZ, Janos
  Berkeley, CA 94708 (US)**
• **LYON, Alan Fancis
  Berkeley, California 94708 (US)**

(74) Representative: **Tevlin, Christopher Michael et al
Marks & Clerk LLP
1 New York Street
Manchester M1 4HD (GB)**

(56) References cited:
**US-A- 5 132 997          US-A- 5 148 462
US-A- 5 276 724          US-A1- 2004 140 432
US-A1- 2011 085 644      US-A1- 2014 064 445
US-B1- 7 170 969         US-B1- 7 394 890**

• **MASAHISA ITO ET AL: "A Stable In-Laboratory
EXAFS Measurement System", JAPANESE
JOURNAL OF APPLIED PHYSICS,, vol. 22, no. 2,
1 February 1983 (1983-02-01), pages 357-360,
XP001416261,**
• **COHEN G G ET AL: "Tunable laboratory extended
x-ray absorption fine structure system", REVIEW
OF SCIENTIFIC INSTRUMENTS, AIP, MELVILLE,
NY, US, vol. 52, no. 21, 1 October 1978
(1978-10-01), pages 273-277, XP001420029, ISSN:
0034-6748**

## Description

## FIELD

This present invention relates to a high brightness x-ray absorption spectroscopy system or apparatus for the analysis of chemical/electronic states of element(s) in materials using the x-ray absorption near-edge spectroscopy (XANES) technique, and for the determination of the atomic coordination number and distance of clement(s) in materials using extended x-ray fine absorption structure (EXFAS) technique.

## BACKGROUND

X-ray absorption spectroscopy is a widely used technique to determine local atomic structure and/or electronic structure of matter. X-ray absorption spectroscopy data are obtained by measuring transmission and/or characteristic fluorescent x-rays of an element in a material as a function of incident x-ray energy over an energy range with sufficiently narrow energy band that corresponds to an absorption edge of an element of interest, at which the incident x-ray photon has sufficient energy to excite core electron(s). The local atomic structure and electronic structure of the material show resonances and exhibit interference effects that affect the x-ray transmission as a function of the incident x-ray energy, so, by measuring the x-ray transmission as a function of x-ray energy, information about the local atomic structure and/or the electronic structure of the material can be determined.

Absorption spectra near x-ray absorption edges are generally divided into the "near edge" region, comprising the first 100 eV near an absorption edge, and the "extended" region, up to 1000 eV higher. Near edge spectroscopy, generally referred to as near edge x-ray absorption fine structure (NEXAFS) spectroscopy, or x-ray absorption near edge spectroscopy (XANES), are the result of transitions of core electrons to low lying unoccupied energy levels, and often has sharp resonance peaks. It is of use in understanding the chemical environment, and in particular the oxidation state of the element involved. Spectroscopy of the more extended energy region, generally referred to as extended x-ray absorption fine structure (EXAFS), exhibits gentle oscillations of absorptivity with energy. These arise from the interactions of the photoelectrons emitted with the surrounding atoms within the structure. From the analysis of EXAFS spectra, distances between atoms can be determined with high precision. The experimental analysis focusing on both spectral regions has been referred to as x-ray absorption fine structure (XAFS).

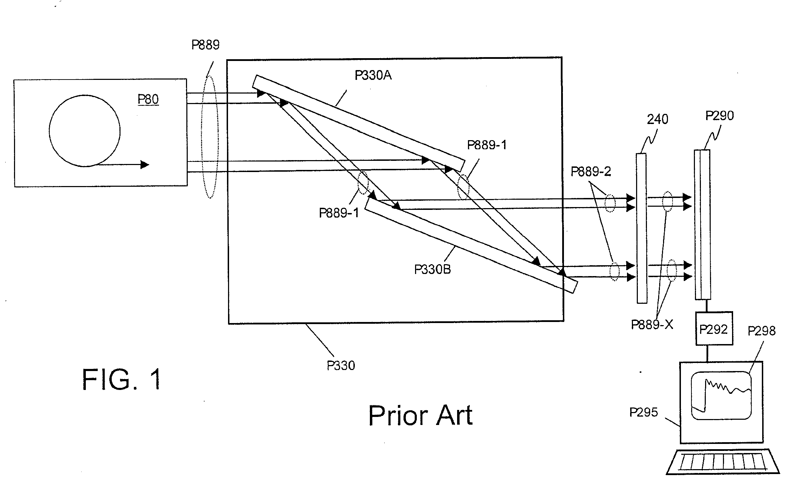

FIG. 1 illustrates a conventional synchrotron XAFS measurement apparatus, in which a synchrotron x-ray source P80 produces a beam of collimated x-rays P889 (typically collimated using an aperture or pinhole). The x-ray optical system associated with the source P80 may also include beam stops, apertures, or other optical elements to shape the x-ray beam P889 to have particular properties. The x-ray beam P889 is then reflected off two crystals P330A and P330B configured to form a monochromator P330 that produces a monochromatic x-ray beam P889-2, which is then incident on a sample 240 to be measured. The transmitted x-rays P889-X that pass through the sample 240 are then detected by a detector P290, which will typically transmit its signals to signal processing electronics P292 that then are further processed by an analysis system P295, which often has a display P298 to show data and results to the user. Motion controls for the double crystal monochromator P330 (not shown) are typically provided so that adjustment of the angle relative to the x-ray beam will select a particular narrow range of x-ray energies for transmission through the monochromator P330.

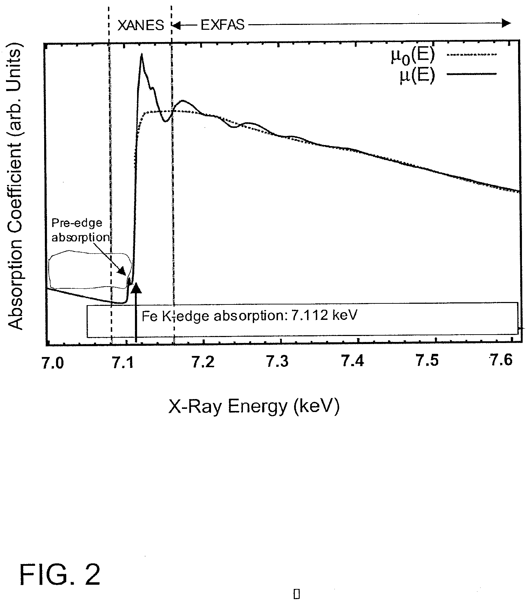

FIG. 2 shows an illustration of XAFS results, in this case for a model iron oxide ($Fe_2O_3$) powder. Data are collected for x-rays with energy near the iron (Fe) K-edge absorption at 7.112 keV. Near edge structure (XANES) is clearly visible, as are the higher energy EXAFS variations from the standard absorption (denoted by $\mu(E)$). From these variations, details of the chemical state and inter-atomic structure of the material may be derived. [Data in FIG. 2 adapted from the PhD dissertation of Mauro Rovezzi, "Study of the local order around magnetic impurities in semiconductors for spintronics." Condensed Matter, Université Joseph-Fourier - Grenoble I, 2009. English. <tel-00442852>.]

Typically, an x-ray beam with an energy bandwidth of less than 1 eV is required for XANES and less than 10 eV for EXAFS measurements. In electron bombardment x-ray sources, the x-ray spectrum typically consists of a continuous spectrum (known as Bremsstrahlung radiation) along with sharp characteristic x-ray fluorescence lines of element(s) in the anode illuminated by the incident electron beam. For XFAS measurement, Bremsstrahlung radiation is typically used. Because intensity oscillations in EXAFS spectra are often less than 10% of the total absorption, and structural parameters can be obtained only after a Fourier transform analysis of the data, highly accurate (0.1% or better) absorption measurements are often required. Therefore, at least a million photon counts are typically required at each energy datapoint.

To meet the narrow energy bandwidth required, a crystal monochromator can be used. Several methods can be used to obtain the required energy bandwidth. One method is to use a pair of flat crystals with appropriate reflection Miller index, such as silicon Si (111), arranged to diffract an incident x-ray beam with a small convergence angle in the dispersion plane (containing the incident and diffraction beam). The required small angular convergence can be obtained for example using a pair of narrow slits separated by a predetermined distance. Sometimes, only one slit is required if the source size in the dispersion plane is small. This method offers several advantages: simple energy scanning by scanning the x-ray beam incidence angle by rotating the monochromator, and a fairly wide energy scanning range using a single crystal, often without need to move the source and the sample in positions and angles, which can be important for many experiments, and results in substantially simpler system and lower cost.

The small convergence angle means that this technique can be widely used for experiments using synchrotron radiation sources, which have high brightness and are highly directional. However, in a laboratory setting, where x-rays are generated in an electron bombardment source, only a small fraction of the x-rays will be collected and used. Consequently, the x-ray flux of a monochromatic x-ray beam obtained using this method from a conventional electron bombardment x-ray source has simply been too low to allow laboratory XAFS measurement.

To circumvent the low x-ray flux and thus low throughput problem, most laboratory source based XAFS systems employ a single bent crystal monochromator in a Rowland circle geometry. In such a system, the x-ray source, the bent crystal, and the slit in front of the sample, are all located on the Rowland circle, with appropriate orientation. Although using a bent crystal can increase the angular acceptance of x-rays generated by the source, Rowland circle based x-ray spectrometers suffer the following drawbacks: difficulty to obtain high x-ray energy resolution due to crystal strain induced by the bending, the requirement of moving at least two of the three major components (source, crystal and slit/sample) for energy scanning. In addition, a single bent crystal covers only a relatively small energy range, so in practice often a set of bent crystals are required. The use of Rowland circle based spectrometers may in part be motivated by the lack of x-ray sources of small size with sufficient brightness, and the lack of x-ray optics for collecting x-rays generated in the source with a large solid angle able to provide an x-ray beam with sufficient angular collimation.

Another performance limiting factor of Rowland circle based monochromator is high order harmonic contamination of the monochromatic x-ray beam because the bent crystal often reflects x-rays of energy equal to an integer multiple of the desired x-ray energy. To circumvent this higher order harmonic contamination problem, low energy electron beam excitation is often used. The use of low energy electrons directly leads to a decrease of x-ray flux because x-ray production efficiency of bremsstrahlung radiation in an electron bombardment x-ray source is approximately proportional to the incident electron energy.

The low performance of conventional laboratory-based x-ray absorption spectroscopy systems has severally limited their utilization. X-ray absorption spectroscopy measurements are currently carried out mostly at synchrotron radiation facilities, which offer high throughput because of their large source brightness and usable x-ray flux over a wide energy range. However, synchrotron radiation sources are large and expensive, often occupying acres of land, and only available in a limited number of locations. As a consequence, access per user group is typically finite and infrequent, particularly for industrial users concerned about protecting intellectual property and/or difficulty justifying important but routine measurements in competition with academic research proposals for lack of pure scientific merit. Other limitations include difficulty in transportation to synchrotron radiation facilities of delicate samples (e.g., fragile or sensitive to oxidization), severe biological and radiological safety considerations, or in-situ experiments requiring special instrumentation that may be unavailable.

XAFS techniques have many applications. In particular, EXAFS can measure local interatomic distances in crystalline and non-crystalline materials. This is a unique capability for non-crystalline materials, such as amorphous solids, solid solutions, dopant and implant materials in semiconductor devices, catalysts, liquids, and organometallic compounds. XANES is particularly useful in determining the oxidation states of the element in its chemical environment. However, these techniques suffer from the lack of a high brightness compact x-ray source that can be used in a laboratory or in the field. There is therefore a need for such a high brightness, compact x-ray system for XAFS measurements.

The document "A Stable In-Laboratory EXAFS Measurement System", Masahisa Ito et al., Japanese Journal of Applied Physics, vol. 22, no. 2, 1 February 1983, pages 357-360, describes a EXAFS measurement system for investigating local atomic arrangements. The measurement system includes an X-ray source, a monochromator, a cryostat in which a specimen is placed and a detector comprising two counters. The X-ray source is a sealed-off Mo tube.

The document US 2011/085644 A1 describes a multiconfiguration X-ray optical system that includes a laboratory X-ray source, a first optical element that delivers two parallel beams and a second optical element that conditions one of the two beams delivered by the first optical element. The first optical element can be a Kirkpatrick-Baez optical system.

The document US 5,132,997 A relates to an X-ray spectroscopic analyzing apparatus that includes an X-ray source, a first analyzing crystal for diffracting X-rays and a second analyzing crystal for diffracting X-rays from the source and for passing X-rays diffracted by the first analyzing crystal.

## BRIEF SUMMARY

The invention is defined in the independent claims. The dependent claims describe embodiments of the invention.

The present invention discloses an x-ray absorption spectroscopy system comprising a compact x-ray source that provides a high brightness x-ray beam within a finite angular range. This is achieved by using a source configuration that allows linear accumulation of x-rays. The system also comprises an x-ray optical train that collects and collimates the x-ray beam from the high brightness source, a monochromator comprising two flat crystals (henceforth referred to as double crystal monochromator) that monochromatizes the collimated x-ray beam and allows for scanning the x-ray energy, and an x-ray detector that collects x-rays resulting from the interaction of the monochromatic x-ray with matter in a sample for analysis. Optionally, it may also comprise a detector that monitors the intensity of the monochromatic x-ray beam before its incidence on the sample (typically partially transmissive and placed before the sample), and/or a second optical train that focuses the monochromatic x-rays onto the sample.

The linear accumulation x-ray source compromises two or more sub-sources of x-rays, with each sub-source having predetermined x-ray spectral characteristics, and with the sub-sources separated physically from each other by predetermined spatial intervals and aligned with each other along a predetermined axis to allow accumulation of x-rays to increase brightness along that axis within a finite angular range. The x-ray sub-sources are produced by electron bombardment of one or more targets comprising x-ray generating materials. At least one of the targets comprises a substrate of low Z material (the first material) with high thermal conductivity, and also an x-ray generating high Z material (the second material) selected for its x-ray generating properties, such as spectral characteristic and x-ray production efficiency, having at least one dimension less than 10 micrometers. In some embodiments, the linear accumulation x-ray source is a line source to increase throughput. In some preferred embodiments, the x-ray source position is scanned to increase data collection throughput.

As part of the system, an x-ray optical train is configured to collect and collimate or focus the x-rays from the high brightness source to produce a high flux collimated x-ray beam over an energy range of interest. The x-ray optical train will typically comprise at least one axially symmetric x-ray mirror optic with a reflecting surface profile selected from paraboloids and/or from type I Wolter optics, which is comprised of an ellipsoid and a hyperboloid. The reflecting surface is typically glass, either uncoated or coated with high mass density material or a multilayer coating. The reflecting surface material should not contain elements with absorption edges in the x-ray energy range of interest. The optical train may additionally include at least one pair of slits or pinholes/apertures to collimate the angular convergence of the x-ray beam in one direction for some embodiments.

A double crystal monochromator monochromatizes the collimated high flux x-ray beam without changing the x-ray beam propagation direction using a none-dispersive configuration, i.e. two identical crystals arranged in parallel. The crystal diffraction Miller index is selected to obtain the energy resolution required. For XANES measurement, the energy range to be scanned is typically within 50-100 eV of the absorption edge of the element of interest with an x-ray energy bandwidth less than 1 eV. For EXAFS, an energy scan of 500-1000 eV is typical, with an x-ray energy bandwidth less than 10 eV. The double crystal monochromator will typically comprise a rotary stage with rotation axis that is parallel to the crystal diffraction plane and perpendicular to the x-ray beam propagation direction.

At least one detector receives x-rays from the sample in response to the interaction of the incident x-ray beam with the sample, and produces signals indicative of properties of the sample. The x-ray signals from the sample might include x-ray transmission through the sample, and/or x-ray fluorescence of an element of interest as a function of the x-ray energy of the incident x-ray beam. In some embodiments, an additional optical train and/or monochromator may be placed before the detector to remove background x-rays and improve signal to noise.

An electromechanical system will also typically be present to control the source, the components of the optical train, the monochromator, the positioning the sample with respect to the incident x-ray beam, and the detector. This system for electromechanical control may be linked to a data analysis system that acquires data corresponding to the x-ray signals, and performs calculations that determine the desired properties of the sample.

## BRIEF DESCRIPTION OF THE DRAWINGS

FIG. 1 presents a schematic view of a prior art x-ray absorption fine structure (XAFS) measurement system.

FIG. 2 illustrates a plot of representative x-ray absorption fine structure (XAFS) spectrum for an iron oxide powder.

FIG. 3 schematically illustrates an XFAS system according to the invention.

FIG. 4 schematically illustrates a linear accumulation x-ray target comprising sub-sources as used in some embodiments of the invention.

FIG. 5 schematically illustrates a linear accumulation x-ray target comprising a monolithic x-ray generating region not used in embodiments of the invention.

FIG. 6 schematically illustrates a linear accumulation x-ray target as used in some embodiments of the invention in which multiple sub-sources are embedded in a substrate with a recessed shelf.

FIG. 7 schematically illustrates a cross section of a two-sided linear accumulation x-ray source as used in some embodiments of the invention.

FIG. 8 schematically illustrates a cross section of a two-sided linear accumulation x-ray source as used in some embodiments of the invention.

FIG. 9 schematically illustrates a linear accumulation x-ray source comprising optics between sub-sources as used in some embodiments of the invention

FIG. 10 illustrates a cross section of a paraboloidal optical element.

FIG. 11 illustrates a cross section of a type I Wolter optical element.

FIG. 12 schematically illustrates a cross sectional view of an x-ray source and a type I Wolter imaging optic as used in some embodiments of the invention.

FIG. 13 schematically illustrates a cross-section of a portion of an embodiment of the invention having a double crystal monochromator.

FIG. 14 schematically illustrates a cross-section of a portion of an embodiment of the invention having additional optical elements focus x-rays onto a sample.

Note: The accompanying drawings, which are incorporated in and constitute a part of the specification, illustrate exemplary embodiments, features, and aspects of the invention and, together with the description, serve to explain the principles of the invention. The drawings are not necessarily to scale; emphasis has instead been placed upon illustrating the principles of the invention.

## DETAILED DESCRIPTIONS OF EMBODIMENTS

### X-ray Absorption Spectroscopy System.

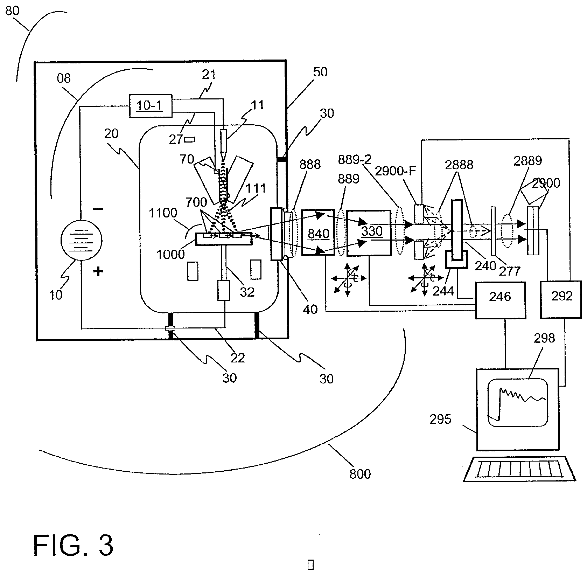

FIG. 3 schematically illustrates an embodiment of the present invention for an x-ray absorption spectroscopy system.

The x-ray generator 08 comprises a vacuum environment (typically $10^{-6}$ torr or better) commonly maintained by a sealed vacuum chamber 20 or using active pumping, and manufactured with sealed electrical leads 21 and 22 that pass from the negative and positive terminals of a high voltage source 10 outside the vacuum chamber 20 to the various elements inside the vacuum chamber 20. The x-ray source 80 will typically comprise mounts 30 which secure elements of the x-ray generator 08 such as the vacuum chamber 20 to a housing 50, and the housing 50 may additionally comprise shielding material, such as lead, to prevent x-rays from being radiated by the source apparatus 80 in unwanted directions. Inside the vacuum chamber 20, an emitter 11 connected through the lead 21 to the negative terminal of a high voltage source 10, which serves as a cathode and generates a beam of electrons 111, often by running a current through a filament. Any number of prior art techniques for electron beam generation may be used for the embodiments of the invention disclosed herein.

A target 1100 comprising a target substrate 1000 and regions of x-ray generating material (shown in FIG. 3 as a set of embedded microstructures 700) is electrically connected to the opposite high voltage lead 22 and target support 32 to be at ground or positive voltage relative to the electron emitter 11, thus serving as an anode. The electrons 111 accelerate towards the target 1100 and collide with it at high energy, with the energy of the electrons determined by the magnitude of the accelerating voltage. The collision of the electrons 111 into the target 1100 induces several effects, including the generation of x-rays 888, some of which exit the vacuum chamber 20 and are transmitted through a window 40 that is transparent to x-rays.

The target 1100, as will be further described below, is configured to have multiple sub-sources of x-rays generated from points that are generally aligned with each other such that they produce x-rays that may have linear accumulation, leading to higher brightness. Microstructured targets such as those that may be used in embodiments of the invention disclosed herein have been described in detail in the co-pending US Patent Application entitled STRUCTURED TARGETS FOR X-RAY GENERATION (US Patent Application 14/465,816, filed Aug. 21, 2014), which, along with the provisional Applications incorporated therein and to which it claims benefit, is hereby incorporated by reference in its entirety. Furthermore, sources using these targets that have a linear accumulation of x-ray sources as are described more fully in the co-pending U.S. Patent Application entitled X-RAY SOURCES USING LINEAR ACCUMULATION by the inventors of the present invention (U.S. Patent Application 14/490,672 filed Sept. 19, 2014), which, along with the provisional Applications incorporated therein and to which it claims benefit, is also hereby incorporated by reference in its entirety. Any of the target and source designs and configurations disclosed in the above referenced co-pending Applications may be considered as alternative components and designs in any or all of the embodiments of the x-ray absorption spectroscopy systems according to the invention disclosed herein.

In some embodiments of the invention, there may also be an electron control mechanism 70 such as an electrostatic lens system or other system of electron optics that is controlled and coordinated with the electron dose and voltage provided by the emitter 11 by a controller 10-1 through a lead 27. The electron beam 111 may therefore be scanned, focused, de-focused, or otherwise directed onto a target 1100 comprising one or more microstructures 700 fabricated to be in close thermal contact with the substrate 1000. In addition to providing one or more electron beam(s) with predetermined properties (e.g. electron energy, current, and focal spot size), such a control mechanism 70 may also direct the respective electron beams to its desired position on one or more x-ray target(s) to generate x-rays at the positions of sub-sources along a predetermined direction.

The system will typically comprise an optical train 840 to collect the x-rays from the source and create an x-ray beam 889 with predetermined angular properties. The system will typically also comprise a monochromator 330 to take the x-ray beam 889 and select certain wavelengths to form a monochromatic beam 889-2 and direct it towards the sample 240 to be investigated. The combined x-ray source apparatus 80, optical train 840 and monochromator 330 may be considered together as an x-ray illuminator 800. In some embodiments, the monochromator 330 may be optionally followed with an additional optical train that focuses the x-ray beam upon the sample.

The sample 240 is typically held in a mount 244, which may have motion controls for x-y- and z translation, as well as rotation about these axes as well. These motion controls may be managed by a controller 246, which may also have input into the x-y-z and rotation controls of the optical train 840 and/or the monochromator 330. The data collection system may comprise an x-ray detector or spectrometer 2900 to collect the transmitted x-rays 2889. The system may also comprise an additional x-ray filter 277 or other component with predetermined spectral properties that may pass the transmitted x-rays 2889 while blocking any x-ray fluorescence 2888 that may be generated in the sample 240. The system may also comprise an additional x-ray detector or spectrometer 2900-F to collect fluorescence x-rays 2888.

The fluorescence detector may be of any type that is energy-resolving, including wavelength dispersive spectrometer types, energy dispersive detectors, or microcalorimeters. Shown in the figure is an energy dispersive type detector with a pinhole, such as a silicon drift detector with a through-hole for the incident beam. Such a configuration allows a large solid angle of collection. However, other embodiments may be envisioned in which a fluorescence-type detector without a through-hole is offset at an angle relative to the sample, either before or after the sample. Depending on the measurement technique being employed, the detector 2900 and/or spectrometer 2900-F may comprise x-ray optical elements and sensors designed to discriminate between x-ray energies.

For XAFS measurement, x-ray absorbance as a function of x-ray energy is obtained by scanning the x-ray energy over a predetermined energy range. The x-ray absorbance is obtained by normalizing the intensity of the x-ray beam passing through the sample 240 to the incident x-ray beam 888 intensity. In some embodiments, an additional detector may be used to directly measure the intensity of the incident x-ray beam 888. This incident intensity detector may be an independent, partially transmissive detector placed in after the monochromator 330 or front of the sample 240, or may be incorporated as part of the monochromator 330 as well. Alternatively, the incident x-ray beam 888 intensity as a function of x-ray energy may also be determined using the detector 2900 by removing the sample from the x-ray beam path. In some embodiments, an x-ray spectrometer 2900-F may record x-ray fluorescence signals, and is used together with or instead of the x-ray detector 2900. The x-ray absorption spectroscopy apparatus may additionally comprise slit(s) to eliminate or reduce unwanted x-rays (such as x-rays scattered outside the collimated x-ray beam) to reach the sample.

For XAFS measurement, the x-ray flux F of the monochromatic x-ray beam incident on the sample using an embodiment of the present invention illustrated in FIG. 3 is given by:

$$F = \eta \, B_s \, S_1 \, S_2 \, \Delta\theta_1 \, \Delta\theta_2 \, \Delta E/E \qquad \text{[Eqn. 1]}$$

where $B_s$ is the x-ray beam brightness at the sample (defined as number of x-rays per unit area and per unit solid angle illuminating the sample and per 0.1% relative spectral bandwidth), $\eta$ is the optical system efficiency for relaying x-rays from the source to the sample, $S_1$ is the source size in the energy dispersion plane (the plane containing the incident and diffracted x-ray beam of the double crystal monochromator) and $S_2$ is the source size in the out-plane that is perpendicular to the dispersion plane and the x-ray beam axis, $\Delta\theta_1$ and $\Delta\theta_2$ are the x-ray beam angular divergence angle in the scattering direction and the out-plane directions, respectively, and $\Delta E/E$ is the relative spectral bandwidth required for a measurement.

The x-ray beam brightness $B_s$ at the sample is typically smaller than the x-ray source brightness ($B$) because the inherent low focusing efficiency and aberrations of the x-ray optical train lead to blurring and therefore an increase in the effective x-ray source size. $B_s$ and $B$ are approximately related by:

$$B_s = B \, \frac{S_1 S_2}{S_1 S_2 + \delta^2} \qquad \text{[Eqn. 2]}$$

where $\delta$ is the full width half maximum (FWHM) of the point spread function of the x-ray optical train, assuming that the optical property of the optical train between the source and the sample is axially symmetric and the optical train is configured to collimate x-rays from the source.

The x-ray energy bandwidth $\Delta E$ passing through a double crystal monochromator is approximately given by

$$\Delta E = E \cot(\theta) \, \Delta\theta_1 \qquad \text{[Eqn. 3]}$$

where E is the x-ray energy of the monochromatic x-ray beam after the double crystal monochromator 130, and $\cot(\theta)$ the cotangent of the Bragg angle (the angle between the incident x-ray beam and the crystal Bragg plane).

Various embodiments of the present invention are designed to obtain a large flux $F$ with a bright linear accumulation x-ray source, a high performance x-ray optical train comprising an x-ray mirror optic with a small point spread function and a large solid angle of collection of x-rays generated by the source, a double crystal monochromator providing a large value of the product of its diffraction efficiency and $\cot(\theta)$ $\Delta\theta_1$, while achieving a desired energy bandwidth $\Delta E$.

**X-ray Source.**

Various embodiments of the linear accumulation x-ray source comprise a plurality of x-ray sub-sources, and may comprise at least one target comprising a substrate (the first material) of low Z material with high thermal conductivity, such as diamond or beryllium, and an x-ray generating material (the second material), such as copper, molybdenum, or tungsten, selected for x-ray generating property, such as spectral characteristic and x-ray production efficiency, and having at least one dimension less than 10 micrometers. In some embodiments, the thermal conductivity of the targets is mainly determined by the thermal conductivity of the substrate material, which allows the use of x-ray generating materials with lower thermal conductivity otherwise not suitable as x-ray target materials in a contiguous single material target employed in prior art, such as germanium and lead, consequently allowing more options for materials to be used to produce characteristic x-ray lines.

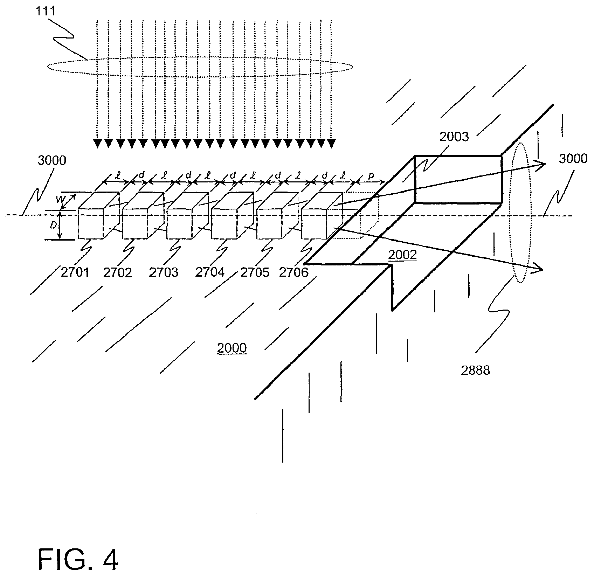

FIG. 4 schematically illustrates an embodiment of a portion of a linear accumulation x-ray source as may be used in some embodiments of the present invention that provides high x-ray brightness. In this source, six discrete microstructures 2701, 2702, 2703, 2704, 2705, 2706 comprising x-ray generating materials selected for x-ray generating properties are embedded or buried in a substrate 2000 and configured at or near a recessed edge 2003 of the substrate 2000 by a shelf 2002, where the material of the substrate is of low average atomic number, high thermal conductivity and high melting point. The x-ray generating microstructures 2701, 2702, 2703, 2704, 2705, 2706 are arranged in a linear array along a predetermined axis 3000, and emit x-rays 2888-D when bombarded with electrons 111. Along the direction within a divergence angle $\psi$ of the axis 3000, x-rays generated in the six sub-sources accumulate and appear to be generated from a single sub-source. The angle range is approximately limited to smaller value of $D$ and $W$ divided by the total length of the x-ray generating region $6*(\ell + d)$.

The thickness of the bar $D$ (along the surface normal of the target) is selected to be between one-third and two-thirds of the depth of the incident electron penetrating into the substrate for optimal thermal performance, but it can be bigger or smaller. The chosen value determines the source size along that direction. Its selection also depends on the accelerating voltage, since the penetration of the electron beam increases with energy. The width of the bar $W$ is selected to obtain a desired source size in the corresponding direction. Though $W \approx 1.5\, D$ is illustrated in FIG. 4, it could also be substantially smaller or larger, depending on the size of the source spot desired.

In FIG. 4, each of the discrete microstructures 2701, 2702, 2703, 2704, 2705, 2706 are shown to have equal length $\ell$ along the axis 3000. The total length of all the six discrete microstructures, $6\,\ell$, will commonly be set to be $\sim 2L$, where $L$ is the x-ray linear attenuation length of the materials of the discrete microstructures for the x-ray energy of interest, but a value of $0.5L$ to $4L$ may be selected. The thickness of the substrate material between two adjacent discrete microstructures is preferably of a value between $0.5\,\ell$ to $3\,\ell$, optimized by considering the relative thermal conductivity and mass density of the materials of the substrate and the discrete microstructures, the x-ray linear attenuation length of the substrate at the x-ray energy of interest, and the desired divergence angle $\psi$.

In one embodiment of the linear accumulation source of the present invention, the incident electron beam uniformly illuminates the area of the substrate containing the discrete microstructures. In this case, because the electron energy deposition rate in a material is proportional to the mass density, the ratio of the energy deposited in the substrate between two adjacent discrete microstructures and in the discrete microstructures is approximately equal to the ratio of their mass densities. Another preferred embodiment of the invention is that the incident electron beam is spatially modulated so that a large fraction of it is incident on the discrete microstructures. This makes efficient use of the incident electron energy for x-ray production and reduces the electron energy deposition in the substrate and improves thermal dissipation of the discrete microstructures.

Each of the discrete microstructures has five faces transferring heat into the substrate, increasing the heat transfer away from the discrete microstructures 2701-2706 and into the substrate. As illustrated, five of six faces of the microstructure are in close thermal contact with the substrate, but adequate heat transfer is expected to occur is half or more of the surface area of the microstructure is in close thermal contact with the substrate. As illustrated, the separation between the sub-bars is a distance $d \approx \ell$, although larger or smaller dimensions may also be used, as discussed above.

The distance between the edge of the shelf and the edge of the x-ray generating material $p$ as illustrated is $p \approx W$, but may be selected to be any value, from flush with the edge 2003 ($p=0$) to as much as 5 mm, depending on the x-ray reabsorption properties of the substrate material for the x-ray energy of interest, the relative thermal properties of the materials of the substrate and the discrete microstructures, and the amount of heat expected to be generated when bombarded with electrons. For example, in some embodiments, it may be generally preferred that the x-ray transmission through the distance p is greater than 50%. X-rays that are generated are collected from the side of the anode, most preferably at near-zero take-off angles (defined as the angle between the x-ray beam axis and the anode surface).

Although the discrete microstructures shown in FIG. 4 are in the shape of rectangular bar and have equal size, other any number of shapes and sizes can be used to achieve high x-ray source brightness using the linear accumulation design principle from plural of sub-sources and the use of the discrete microstructures embedded or buried in a substrate to improve the thermal dissipation property of the x-ray generating material of each sub-source, such as cubes, rectangular blocks, regular prisms, right rectangular prisms, trapezoidal prisms, spheres, ovoids, barrel shaped objects, cylinders, triangular prisms, pyramids, tetrahedra, or other particularly designed shapes, including those with surface textures or structures that enhance surface area, to best generate x-rays of high brightness and that also efficiently disperse heat. Furthermore, the x-ray generating material in each of the sub-sources may not be of single uniform material but comprise additional finer structures of x-ray generating material.

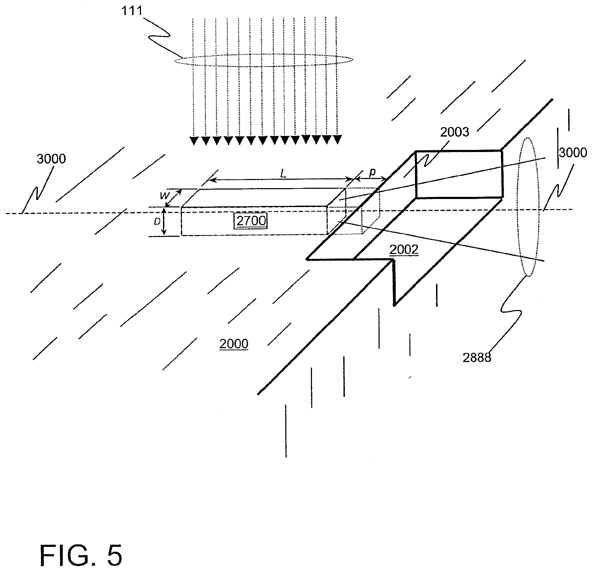

FIG. 5 schematically illustrates an example not being an embodiment of the present invention comprising a single microstructure 2700 instead of the discrete microstructures of FIG. 4. In this illustration, the width $W$ and depth $D$ into the substrate of the microstructure 2700 are the same as in FIG. 4, while the accumulated length $L$ of the microstructure 2700 is equal to $6\ell$. In other words, the volume of the x-ray generating material in FIGs. 4 and 5 are the same, and similar volume of x-rays may be produced by similar excitation by an electron beam 111. Similar design considerations on $D, W, L,$ and p for FIG. 4 apply here.

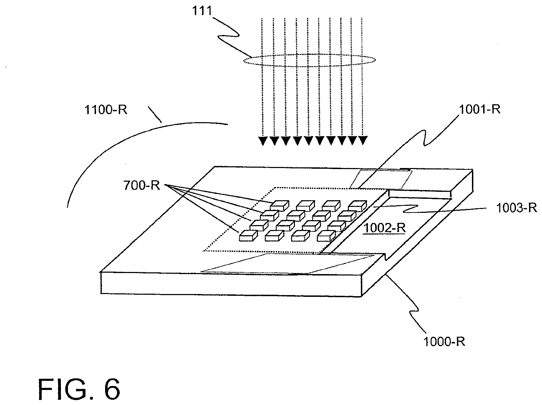

In FIG. 6, a variation of the source target 1100-R as used in some embodiments of the invention is shown, comprising a two-dimensional array of microstructures 700-R embedded in a substrate 1000-R. This functions on a similar principle to the one-dimensional array of microstructures shown in FIG. 4. Each of the microstructures 700-R acts as a sub-source of x-rays when bombarded by an electron beam 111. The microstructures 700-R as shown are arranged near the edge 1003-R of a recessed shelf 1002-R formed in the substrate 1000-R. The combination of the high thermal conductivity of the substrate and the small dimension of the discrete microstructures allows heat to be efficiently drawn out of the x-ray generating material, and in turn allows bombardment of the discrete microstructures with higher electron density and/or higher energy electrons, leading to greater x-ray brightness and flux, especially along take-off angles near zero degrees.

It should also be noted here that, when the word "discrete microstructure" is used herein, it is specifically referring to microstructures comprising x-ray generating material, preferably with at least one dimension smaller than 100 $\mu$m. Likewise, it should be noted that, although the word "discrete microstructure" is used, x-ray generating structures with at least one dimension smaller than 1 micron, or even as small as nano-scale dimensions (i.e. greater than 10 nm) may also be described by the word "discrete microstructures" as used herein as long as the properties are consistent with the geometric factors for sub-source size and pitches set forth in the various embodiments.

It should also be noted that here that, when the word "sub-source" is used it may refer to a single discrete microstructure of x-ray generating material, or an ensemble of smaller microstructures of x-ray generating materials, illuminated by a single electron beam.

The x-ray generating material used in the target should have good thermal properties, such as a high melting point and high thermal conductivity, in order to allow higher electron power loading on the source to increase x-ray production. The x-ray generating material should additionally be selected for good x-ray production properties, which includes x-ray production efficiency (proportional to its atomic number) and in some cases, it may be desirable to produce a specific spectra of interest, such as a characteristic x-ray spectral line. For example, targets are often fabricated using tungsten, with an atomic number Z=74, due to its efficient x-ray production and its high thermal conductivity.

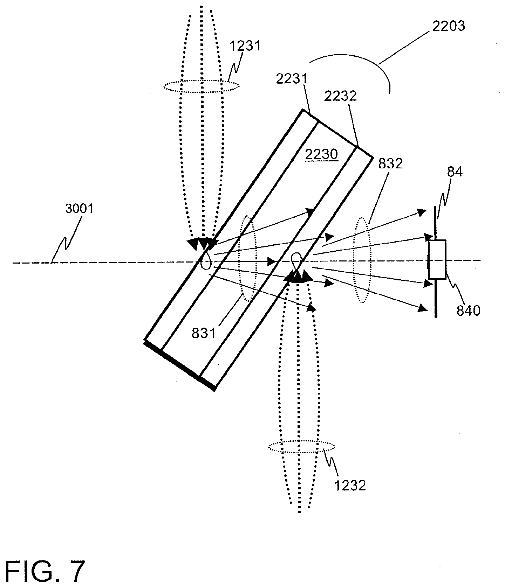

FIG. 7 schematically illustrates an embodiment of the linear accumulation x-ray source employed in various x-ray source embodiments of the present invention that comprises two sub-sources with targets sharing a common substrate 2230. The substrate may be a first material of low atomic number, low mass density, high thermal conductivity and high melting point, aligned to increase linear accumulation of x-rays along an axis 3001 connecting the two sub-sources. In this embodiment, the source will have two electron beams 1231 and 1232 that are controlled to bombard the respective x-ray generating materials 2231 and 2232 coated on the common substrate 2230 and generate x-rays 831 and 832, respectively.

The x-ray generating materials are sufficiently thick for efficient generation of x-rays of desired spectra but sufficiently thin for high transmission of the desired x-rays. The underlying principle is that the electron penetration depth is typically much smaller than the x-ray linear attenuation length, especially for higher energy x-rays. The thickness of the x-ray generating materials 2231 ad 2232 is typically selected to be less than or comparable to the depth of the incident electron beam penetrating into the x-ray generating materials 2231 and 2232, a larger value may be used. If the bombardment occurs at an angle to the surface normal, as illustrated, the angle of incidence can also affect the selection of the coating thickness. Although the tilt of the targets 2203 and 2204 relative to the electron beams 1231, 1232 and 1222 is shown as ~45°, any angle from 0° to 90° that allows x-rays to be generated may be used.

The material of the common substrate 2230 is typically selected from a material of low Z material with high thermal conductivity, such as diamond, diamond like material, and beryllium, and silicon carbide. The thickness of the common substrate is selected to have high x-ray transmission for the x-ray energy of interest, often greater than 50%. The distance between the two sub-sources is generally greater than the incident electron beam size.

It is possible that one or more of the anodes of the sub-sources has a very thin substrate or even zero thickness in the impact region of the electron beam(s). It is typical that the anodes (with or without the substrate) of the sub-sources are supported on a support frame with an opening reasonably larger than the incident electron beam or x-ray source size. The support frame will typically have high thermal conductivity and may be cooled using techniques well known to those skilled in the art. In some embodiments, the frame will be cooled to a temperature of minus 90 centigrade when the substrate or the frame is made of diamond to make use of the increased thermal conductivity of diamond with decreasing temperature.

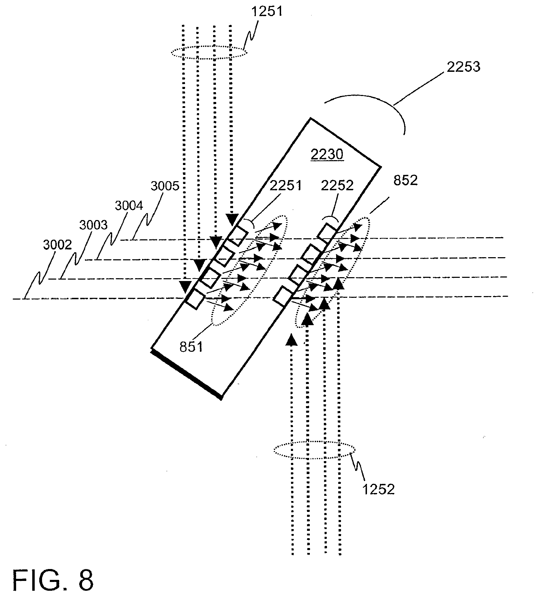

Though the x-ray sub-sources 2231 and 2232 in FIG. 7 are shown as extended targets comprising a layer of single material, in other embodiments at least one of the single material layer target may be replaced with a region comprising a plurality of discrete microstructures of x-ray generating materials embedded or buried in the common substrate 2230, such as those illustrated in FIG 8. In this figure, each of the discrete microstructures in the sets of microstructures 2151 and 2152 acts a x-ray sub-source, generating x-rays 851 and 852, respectively, when illuminated by electron beam 1251 and 1252, respectively. When aligned with each other along axes 3002-3005, these also produce a higher brightness x-ray beam with an extended beam profile that operates on the same principle the source as illustrated in FIG. 7.

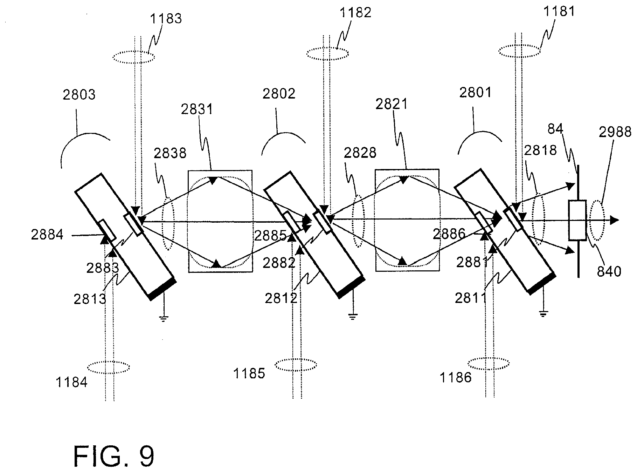

FIG. 9 schematically illustrates yet another embodiment of a linear accumulation x-ray source employed in various embodiments of the present invention that comprises a plurality of targets 2801, 2802, and 2803 with x-ray generating material fabricated on both sides of the respective substrates and aligned along a predetermined axis. Imaging optics (2821 or 2831) collects and images x-rays from one sub-source, for example, 2883, to another sub-source, for example, 2882, on a different substrate so that x-rays from the two sub-sources appear to originate from a single sub-source at 2882 when viewed along the axis. Aligning multiple sources of x-ray generation in this manner can achieve linear accumulation of x-rays and higher brightness. As shown, each of the sub-sources has an electron beam (1181, 1182, 1183, 1184, 1185, and 1186) corresponding to a target containing an x-ray generating material (2881, 2882, 2883, 2884, 2885, 2886, respectively). The x-ray target may be a layer of the x-ray generating material deposited on its respective substrate, as was illustrated in FIG. 7, or comprise a plurality of the discrete microstructures fabricated in close thermal contact with (such as embedded in or buried in) with its respective substrate, as is illustrated in FIG. 8.

To preserve the brightness of the sub-sources, the x-ray imaging optic that collects the generated x-rays may have a point spread function less than the effective source size of the two sub-sources, the smaller one if two sub-sources have different source sizes. The focusing efficiency of the x-ray imaging optic 2831 and/or 2832 may be designed to be greater than 50%. The surface profiles of these x-ray mirrors that collect the x-rays generated by one sub-source and relay them to the next sub-source may be designed such that the x-rays with the desired x-ray energy incident on the x-ray mirror surface at a grazing angle smaller than or equal to the critical angle for total reflection of the mirror surface material at the desired x-ray energy. The mirror surface material may be glass, or coated either with a high mass density material to increase the critical angle for total reflection to collect more x-rays from the linear accumulation x-ray source. It is important that the material of the reflecting surface doesn't contain elements with x-ray absorption edges in the x-ray spectra of interest for a given measurement. Typical mirrors that collect and focus x-rays may surfaces corresponding to ellipsoids, although other surface configurations or optical designs that collect and focus x-rays, such as those using combinations of Wolter optics or those using polycapillary optics, will be known to those skilled in the art.

FIG. 9 shows six x-ray sub-sources with targets fabricated on three separate substrates with every two sub-sources sharing a common substrate, and each illuminated by a corresponding electron beam, but any number of regions of x-ray generating material can be aligned in this manner to produce a high brightness x-ray source with linear accumulation. This linear accumulation method can be repeated multiple times to obtain higher source brightness along the axis of alignment. The x-ray targets including the substrate and x-ray generating materials in at least one direction along the axis are selected to have high x-ray transmission, preferably greater than 50%, for the x-ray energy of interest.

It is possible that one or more of the anodes of the sub-sources has a very thin substrate or even zero thickness in the impact region of the electron beam(s). In some embodiments, the anodes (with or without the substrate) of the sub-sources are supported on a support frame with an opening reasonably larger than the incident electron beam or x-ray source size. The support frame may have high thermal conductivity and may be cooled using techniques known to those skilled in the art. It is preferred to cool the frame to a temperature down to minus 90° centigrade when the substrate or the frame is made of diamond to make use of the increased thermal conductivity of diamond with decreasing temperature.

The selection of the materials of the linear accumulation source target used in some embodiments is such that the substrate (the first material) is of low Z material with high thermal conductivity, such as diamond or beryllium, and the material of the sub-sources (the second material) are selected for x-ray generating properties such as spectral characteristics and x-ray production efficiency and may include (but are not limited to) copper, molybdenum, and tungsten. In some embodiments, the thermal conductivity of the targets is mainly determined by the thermal conductivity of the substrate material, which allows the use of x-ray generating materials with lower thermal conductivity otherwise not suitable as x-ray target materials, such as germanium and lead, in conventional contiguous single material targets, consequently allowing a greater number of elements available to produce characteristic x-ray lines.

Systems are generally designed such that the all materials in the x-ray beam path from the source to the sample, including the x-ray generating material and the substrate material, should contain no or negligible amounts of elements that absorb x-rays in the spectral region of interest, especially for EXAFS measurement. Multiple x-ray generating materials made may be selected to cover a predetermined x-ray energy range.

The anode targets as shown in FIGs. 1 through 9 may be cooled using methods known in the art, such as water cooling, thermoelectric cooling, and/or heat pipes, which may also be employed to increase the thermal performance of the anode and thus the brightness of the x-ray source.

Any number of prior art techniques for generating electron beams may be used for the embodiments of the linear attenuation x-ray source disclosed herein. Some of the known techniques used for electron beam generation include heating a filament for thermionic emission, Schottky emission (a combination of heating and field emission), emitters comprising nanostructures such as carbon nanotubes), and by use of ferroelectric materials. [For more on electron emission options for electron beam generation, see Shigehiko Yamamoto, "Fundamental physics of vacuum electron sources", Reports on Progress in Physics vol. 69, pp. 181-232 (2006)]. It is preferred that the size of the electron beam is optimized according to the x-ray source size desired.

In some embodiments of the invention, there may also be electron optical systems that in addition to providing electron beam(s) with predetermined property (electron energy, current, and focal spot size), can control and direct the respective electron beams to their desired positions on the respective x-ray targets.

**X-ray Optical Train.**

Various embodiments of the x-ray absorption spectroscopy system comprise an x-ray optical train to collect a portion of x-rays from the linear accumulation x-ray source and subsequently spectrally filter, collimate or focus the x-rays to produce an x-ray beam to be incident on the sample to be analyzed. It should be noted that in the variations of optical trains illustrated as cross-sections in the following figures that the optics may be axially symmetric and also have either an absorbing beam stop, slit, or aperture that absorbs x-rays that are not reflected. However, other designs of x-ray optical trains may be known to those skilled in the art.

Optical trains such as those that may be used in embodiments of the invention disclosed herein have been described in detail in the co-pending US Patent Application entitled X-RAY ILLUMINATORS WITH HIGH FLUX AND HIGH FLUX DENSITY (US Patent Application 14/544,191, filed Dec. 5, 2014), which, along with the provisional Applications incorporated therein and to which it claims benefit, is hereby incorporated by reference in its entirety.

To improve the numerical aperture of the optical elements of the optical train, some embodiments of the invention may use coatings on the reflective surface. These coatings are preferably high density materials (greater than 2.5 g/cm$^3$) such as platinum, iridium, or gold and typically around a few angstroms to a few nanometers in thickness. Such high density coatings provide a larger critical angle for reflection, enabling the collection of more x-rays. Alternatively, multilayer coatings that reflect x-rays using alternating periodic layers of two or more materials which provide constructive interference in reflection for certain wavelengths. The reflection efficiency depends on the wavelength and angle of incidence of the x-rays, and the thickness of the alternating layers, so this has limited use as a broadband reflector, but may be used if specific wavelengths are desired. Combinations that may be used for multilayer reflectors are tungsten/carbon (W/C), tungsten/tungsten silicide (W/WSi2), molybdenum/silicon (Mo/Si), nickel/carbon (Ni/C), chromium/scandium (Cr/Sc), and lanthanum/boron carbide (La/B$_4$C), and tantalum/silicon (Ta/Si), among others. The surface may also be a compound coating comprising an alloy or mixture of several materials.

In some embodiments, the optics may furthermore be nested (concentric within each other) to allow greater collection of x-rays, as is typical with the non-axial symmetric mirrors used commonly in x-ray astronomy.

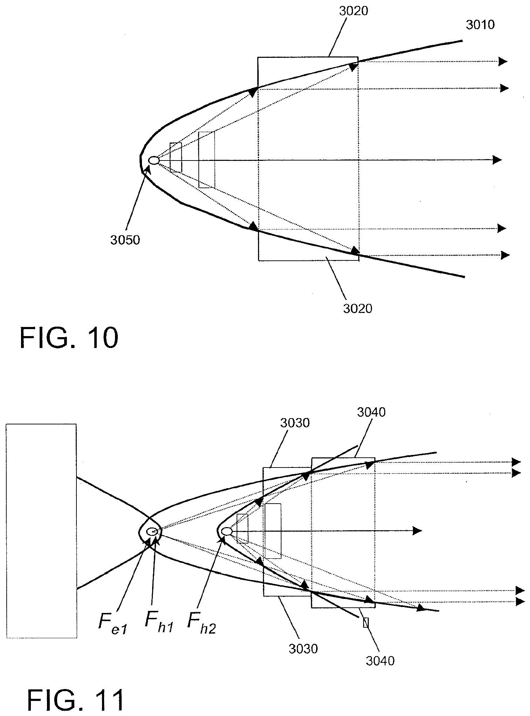

FIGs. 10 and 11 schematically illustrate variations of optical train components to produce a collimated high brightness x-ray beam. FIG. 10 illustrates a cross-section of an x-ray mirror 3020 of which the interior reflecting surface corresponds to a portion of a paraboloid 3010. It will be generally configured so that its focus 3050 will be positioned with the center of the linear accumulation x-ray source, and that its axis is aligned along the axis of the linear accumulation x-ray source, such as was illustrated by the axis 3000 in FIG. 4. The x-ray mirror 3020 collects x-rays from the source and generates a collimated x-ray beam. As the source will not be a perfect point source, the angular convergence of the collimated beam is approximately equal to the apparent linear accumulation x-ray source divided by the distance between the source and the entrance of the x-ray mirror 3020.

The surface profile of the x-ray mirror may be designed such that the x-rays with the desired x-ray energy incident on the x-ray mirror surface at a grazing angle smaller than or equal to the critical angle for total reflection of the mirror surface material at the desired x-ray energy. The mirror surface material may be glass, or coated either with a high mass density material to increase the critical angle for total reflection to collect more x-rays from the linear accumulation x-ray source. The mirror surface may also be coated with a multilayer of appropriate material composition, d-spacing gradient, and appropriate d-spacing gradient along the optical axis, to increase solid angle of x-ray collection from the linear accumulation x-ray source and obtain an x-ray beam with narrow spectra.

FIG. 11 schematically illustrates a cross-section of another optical train that may be used in embodiments of the presentation invention to produce a collimated high brightness x-ray beam. The optical train in this example comprises a type I Wolter reflecting optic having a first component 3040 corresponding to an ellipsoid and a second component 3040 corresponding to a hyperboloid. Both components are aligned to be co-axial, and with one of the foci of the ellipse $F_{e1}$ corresponding to one of the foci of the hyperbola $F_{h1}$.

In embodiments of the invention, the type I Wolter mirror is typically configured such that the focus $F_{h1}$ will be positioned at the center of the linear accumulation x-ray source and its optical axis is aligned to correspond to the axis of the linear accumulation x-ray source, such as was illustrated by the axis 3000 in FIG. 4. Similar to the parabolic optic of FIG. 10, it is preferred that the angular convergence of the collimated beam in the scattering plane is smaller than the critical angle of the sample.

The slopes and surface profiles of the x-ray optics are designed such that the x-rays with the desired x-ray energy are incident on the x-ray mirror surface at a grazing angles that are smaller than or equal to the critical angle of the mirror surface material for total at the desired x-ray energy. The surface material of one or both mirror components may be glass, or coated either with a high mass density material to increase the critical angle for total reflection, which is proportional to the square root of the density of the material. The mirror surface may also be coated with a multilayer of appropriate material composition, d-spacing gradient, and appropriate d-spacing gradient along the optical axis, to increase solid angle of x-ray collection from the linear accumulation x-ray source and obtain an x-ray beam with narrow spectra. Compared with the single paraboloid mirror illustrated in FIG. 10, the type I Wolter mirror illustrated in FIG. 11 can have up to 4X the solid angle of collection of x-rays from the linear accumulation x-ray source, resulting in a collimated x-ray beam with a larger x-ray flux.

The x-ray optical train may further comprise a spectral filtering component to narrow the energy spectra of the collimated x-ray known in the prior art, such as a thin foil spectral filter. Additionally, it may also compromise aperture(s) or slit(s) to obtain a desired beam shape and size, as will be known by those skilled in the art.

In addition to collimating optics, variations of optics for the optical train of embodiments may also use focusing optics. It should be noted that, like the collimating optics, all optical mirror surface materials may be glass, or coated either with a high mass density material. The mirror surface may also be coated with a multilayer of appropriate material composition, d-spacing gradient, and appropriate d-spacing gradient along the optical axis, to increase solid angle of x-ray collection from the linear accumulation x-ray source and obtain an x-ray beam with narrow spectra.

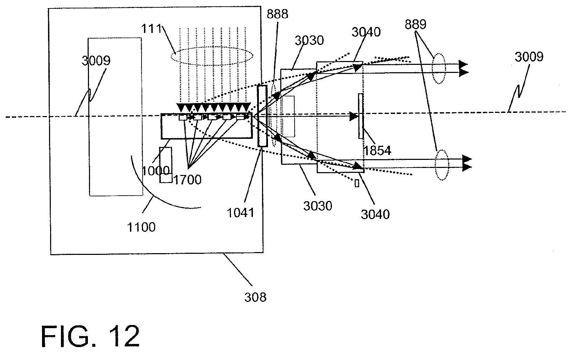

FIG. 12 illustrates a portion of an embodiment of the invention comprising an x-ray source 308 that uses a target 1100 comprising a substrate 1000 and a plurality of microstructures 1700 that are bombarded by electrons 111 to generate high brightness x-rays 888. These x-rays exit the source through a window 1041 and enter an optical train comprising optical elements 3030 and 3040 in the form of type I Wolter optics aligned along the same axis 3009 that corresponds to the axis of linear accumulation of x-rays in the source 308. The optical train as shown also comprises a beam stop 1854, so that the output of the optical train is a collimated x-ray beam 889.

Compared with the single paraboloid mirror illustrated in FIG. 10, the type I Wolter mirror can have up to 4X solid angle of collection of x-rays from the linear accumulation x-ray source, resulting in a collimated x-ray beam with a larger x-ray flux. Although the optics shown in FIG. 12 are type I Wolter optics, other optical elements such as parabaloidal optical elements or polycapillary optics may be used in similar embodiments of the invention if their configuration produces a collimated or near collimated beam.

The surface profiles of the x-ray mirrors may be designed such that the x-rays with the desired x-ray energy incident on the x-ray mirror surface at a grazing angle smaller than or equal to the critical angle for total reflection of the mirror surface material at the desired x-ray energy. The mirror surface material may be glass, or coatcd either with a high mass density material to increase the critical angle for total reflection to collect more x-rays from the linear accumulation x-ray source.

### X-ray Monochromator.

As was illustrated in FIG. 3, once a collimated x-ray beam has been created, the collimated x-ray beam enters a monochromator to reduce the energy bandwidth. One example typically used is the double crystal monochromator. The double crystal monochromator can be any number of monochromators known in the art. The double crystal monochromator can comprise two individual single crystals aligned with their respective diffraction planes parallel to each other. Alternatively, it may be a channel cut monochromator created using a monolithic single crystal. Suitable crystal materials include silicon (Si), germanium (Ge), lithium fluoride (LiF), and indium antimonide (InSb). Suitable crystal diffraction plane for a predetermined spectral bandwidth over predetermined energy spectra range can be selected using known art.

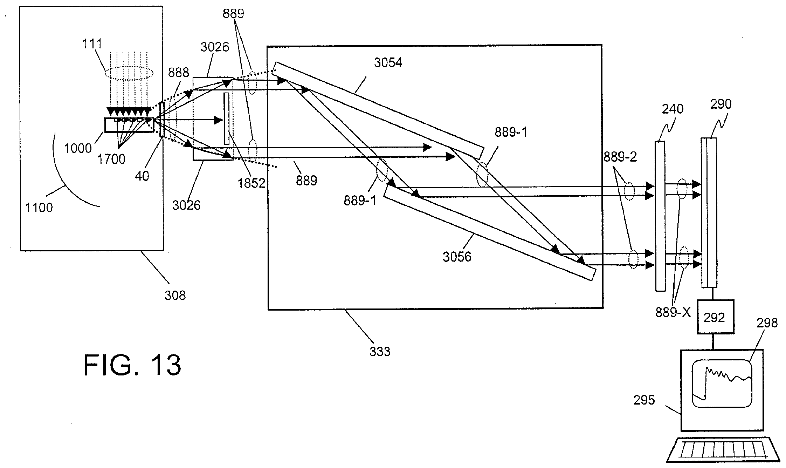

FIG. 13 schematically illustrates an embodiment of the invention to perform XAFS for a sample 240. As in FIG. 12, The x-ray absorption spectroscopy apparatus comprises a linear accumulation x-ray source 308 generating high brightness x-rays 888 using bombardment with electrons 111 of a target 1100 comprising a substrate 1000 with a plurality of microstructures 1700 comprising x-ray generating material. As shown, the origin of the x-ray generation occurs along a predetermined axis coincident with the axis of a first paraboloidal x-ray mirror 3026, which is properly positioned and aligned to produce a collimated x-ray beam 889. Although a parabaloidal reflecting optic is shown, the optic may alternatively comprise type I Wolter optics, as was shown in FIG. 12, or any number of other x-ray optical elements that can produce a collimated x-ray beam 889.

The collimated x-ray beam 889 then enters a double crystal monochromator 333 comprising a first crystal 3054, which reflects the desired spectral component 889-1 onto a second crystal 3056 to further limit the spectral bandwidth to produce a monochromatized x-ray beam 889-2 with predetermined x-ray energy. The crystal monochromator may be of any type known to the art, such as common U-shaped (channel-cut) crystals comprised of silicon (Si) or germanium (Ge) single crystal or parallel semiconductor crystal plates. The double crystal monochromator is rotated to change the Bragg angle of the collimated x-ray beam, which enables selection of x-ray energies of interest by changing Bragg angle. The surface material of one or both mirror components may be glass, or coated either with a high mass density material to increase the critical angle for total reflection to collect more x-rays from the linear accumulation x-ray source. It is important that the material of the reflecting surface doesn't contain elements with x-ray absorption edges in the x-ray spectra of interest for a given measurement.

It should be noted that both the angular convergence $\Delta\theta_2$ and the x-ray source size $S_2$ in the out-plane direction can preferably be large to obtain large x-ray flux according to Eqn. 1 without affecting the energy spectral bandwidth of the double crystal monochromator. The surface profiles of the x-ray mirrors are designed such that the x-rays with the desired x-ray energy incident on the x-ray mirror surface at a grazing angle smaller than or equal to the critical angle for total reflection of the mirror surface material at the desired x-ray energy. The mirror surface material may be glass, or coated either with a high mass density material to increase the critical angle for total reflection to collect more x-rays from the linear accumulation x-ray source.

## Detection and Analysis.

As shown in FIG. 13, after exiting the monochromator 333, the monochromatic x-ray beam 889-2 in some embodiments of the invention will be directed directly onto the sample 240 to be examined. The transmitted x-rays 889-X then fall onto a detector 290 that detects the x-rays and converts them into electrical signals. These electrical signals then undergo signal processing by signal processing electronics 292, and then undergo further analysis in an analysis system 295 which may also have a display 298 to show the results.

A partially transmissive detector (not shown) may be placed in front of the sample 240 to measure the x-ray beam incident upon the sample, or the sample may be attached to an electromechanical stage that moves the sample out of the beam to measure the incident x-ray beam and then back into the beam to measure the transmitted x-ray beam. In some embodiments, an additional optical train, filter and/or monochromator may be placed after the sample but before the detector to remove background x-rays and improve signal to noise.

Motion of the elements of the optical train, the monochromator 333, and the stage holding the sample 240 may be coordinated to allow the electronic signals correlated with a particular x-ray energy setting to be determined. Multiple datapoints at multiple settings may also be collected to provide an XAFS spectrum.

In various embodiments, the x-ray detector 290 may include a gas filed proportional counter, an ionization chamber, a silicon drift detector, and other x-ray detectors known in art to detect the intensity of the x-rays transmitted through the sample as a function of the monochromatic x-ray energy. Additionally, a spectrometer such as a silicon drift detector may be used to also detect fluorescent x-rays from the sample as a function of the monochromatic x-ray energy

Other variations also exist for embodiments of the invention. Additional spectral filters or monochromators may be used between the sample 240 and the detector 290 to select a certain portion of the x-rays emerging from the sample 240 for detection. This may be especially useful if there is a significant amount of x-ray fluorescence from the sample 240 that may interfere with the signals generated by the transmitted x-rays. Alternatively, a second detector, as was illustrated in FIG. 3, may be included to detect the fluorescence directly, either on the back side of the sample 240, or from the front side (before the x-ray beam passes through the sample). Depending on the material under investigation and the spectrum under investigation, such a fluorescence monitor may also serve as an independent monitor for the incident x-ray intensity.

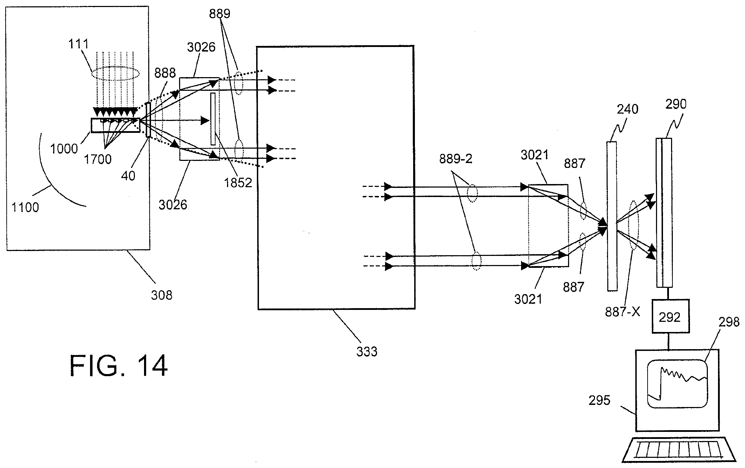

FIG. 14 illustrates a variation in which an additional focusing optic 3021 is provided after the monochromator 333 to convert a collimated beam 889-2 into a converging x-ray beam 887. This allows the x-ray transmission of a particular location on the sample 240 to be probed, which may be desired if there is some variation in composition and surface quality present. Likewise, translation of the sample when used with a focused monochromatic x-ray beam may provide information about the micro-composition of the sample.

To keep a fixed position of the focused x-ray beam on the sample, the double crystal monchromator can be designed in accordance with monochromators widely used in synchrotron x-ray absorption spectroscopy facilities. Alternatively, when a channel-cut double crystal monochromator is used, the sample can be moved by an electromechanical system to keep the focused x-ray beam position fixed on the same spot on the sample.

**Limitations and Extensions.**

With this application, several embodiments of the invention, including the best mode contemplated by the inventors, have been disclosed. It will be recognized that, while specific embodiments may be presented, elements discussed in detail only for some embodiments may also be applied to others.

While specific materials, designs, configurations have been set forth to describe this invention and the preferred embodiments, such descriptions are not intended to be limiting. Modifications and changes may be apparent to those skilled in the art, and it is intended that this invention be limited only by the scope of the appended claims.

All elements, parts and steps described herein are preferably included. It is to be understood that any of these elements, parts and steps may be replaced by other elements, parts and steps or deleted altogether as will be obvious to those skilled in the art.

Broadly, this writing discloses at least the following.

This disclosure presents systems for x-ray absorption fine structure (XAFS) measurements that have x-ray flux and flux density several orders of magnitude greater than existing compact systems. These are useful for laboratory or field applications of x-ray absorption near-edge spectroscopy (XANES) or extended x-ray fine absorption structure (EXFAS) spectroscopy.

The higher brightness is achieved by using designs for x-ray targets that comprise a number of aligned microstructures of x-ray generating materials fabricated in close thermal contact with a substrate having high thermal conductivity. This allows for bombardment with higher electron density and/or higher energy electrons, leading to greater x-ray brightness and high flux.

The high brightness x-ray source is then coupled to an x-ray reflecting optical system to collimate the x-rays, and a monochromator, which selects the exposure energy. Absorption spectra of samples using the high flux monochromatic x-rays can be made using standard detection techniques.

**Claims**

1. An x-ray absorption fine structure measurement system, comprising:

a high brightness x-ray source (80), comprising:

at least one electron beam emitter (11); and
at least one anode target (1100) comprising:

a substrate (1000) comprising a first selected material; and
at least one x-ray generating structure comprising a second material selected for its x-ray generation properties and comprising a plurality of discrete microstructures (700) in which each of the plurality of discrete microstructures is in thermal contact with the substrate and in which at least one of the discrete microstructures has at least one dimension of less than 20 microns;

an optical train (840) to collect x-rays generated by the anode target and produce a collimated x-ray beam (889);
an x-ray monochromator (330) to select x-rays of a predetermined energy and a predetermined energy bandwidth from the collimated x-ray beam;
a mount (244) to hold an object (240) to be investigated, the mount positioned such that the x-rays of predetermined energy and bandwidth will be transmitted through the object; and
a detector (2900) to measure the x-rays transmitted through the object.

2. The system of Claim 1, wherein the detector comprises:

a detector to measure the intensity of the x-rays incident on the object; or
a detector to measure the intensity of x-ray fluorescence emitted by the object when exposed to the x-rays of predetermined energy and bandwidth.

3. The system of any one of the preceding claims, in which each lateral dimension of said at least one of the discrete microstructures is less than 50 microns.

4. The system of any one of the preceding claims, in which the plurality of discrete microstructures is arranged in a linear array along a predetermined axis; and the optical train is also aligned along said predetermined axis.

5. The system of any one of the preceding claims, in which the first selected material is selected from the group consisting of: beryllium, diamond, graphite, silicon, boron nitride, silicon carbide, sapphire and diamond-like carbon.

**6.** The system of any one of the preceding claims, in which the second material is selected from the group consisting of: aluminum, titanium, vanadium, chromium, manganese, iron, cobalt, nickel, copper, gallium, zinc, yttrium, zirconium, molybdenum, niobium, ruthenium, rhodium, palladium, silver, tin, iridium, tantalum, tungsten, indium, cesium, barium, gold, platinum, lead and combinations and alloys thereof.

**7.** The system of any one of the preceding claims, in which a subset of the plurality of discrete microstructures comprises a third material selected for its x-ray generation properties.

**8.** The system of any one of the preceding claims, in which the plurality of discrete microstructures are arranged such that x-rays generated by a predetermined number of the plurality of discrete microstructures when exposed to an electron beam from the electron beam emitter are transmitted through a predetermined one of the discrete microstructure selected from the plurality of discrete microstructures.

**9.** The system of Claim 1, wherein the at least one electron beam emitter comprises a plurality of electron emitters and the at least one anode target comprises a plurality of anode targets, such that each electron beam emitter is aligned to provide an electron beam to bombard a corresponding anode target to generate x-rays, and the anode targets are aligned such that the positions at which x-rays are generated are aligned along a predetermined axis, and the optical train is also aligned along said predetermined axis.

**10.** The system of any one of the preceding claims, in which the optical train comprises an x-ray reflector (3020, 3030, 3040) with a surface corresponding to a quadric surface.

**11.** The system of Claim 10, in which the quadric surface is selected from the group consisting of: a spheroid, an ellipsoid, a paraboloid, a hyperboloid, an elliptic cylinder, a circular cylinder, an elliptic cone, and a circular cone.

**12.** The system of any one of the preceding claims, in which the optical train comprises a type I Wolter x-ray optic; or the predetermined energy bandwidth is less than 10 eV.

**13.** The system of any one of the preceding claims, in which the x-ray monochromator comprises a channel cut crystal comprising a material selected from the group consisting of: silicon, germanium, lithium fluoride, and indium antimonide.

**14.** The system of any one of the preceding claims, in which the monochromator comprises a double crystal monochromator.

**15.** The system of any one of the preceding claims, further comprising a control system (246) to coordinate the settings of the x-ray monochromator and the position and rotation of the object.

**Patentansprüche**

**1.** Röntgenabsorptions-Feinstruktur-Messsystem, Folgendes beinhaltend:

eine Röntgenquelle (80) mit großer Helligkeit, Folgendes beinhaltend:

mindestens einen Elektronenstrahl-Emitter (11); und
mindestens ein Anodentarget (1100), Folgendes beinhaltend:

ein Substrat (1000), welches ein erstes ausgewähltes Material beinhaltet; und mindestens eine Röntgenstrahlen erzeugende Struktur, welche ein zweites Material beinhaltet, welches aufgrund seiner Röntgenstrahlen-Erzeugungseigenschaften ausgewählt ist und eine Vielzahl von diskreten Mikrostrukturen (700), bei welchen jede der Vielzahl von diskreten Mikrostrukturen in thermischem Kontakt mit dem Substrat steht und bei welchen mindestens eine der diskreten Mikrostrukturen mindestens eine Abmessung von unter 20 Mikrometern besitzt;

eine optische Anordnung (840) zum Sammeln der durch das Anodentarget erzeugten Röntgenstrahlen und zum Produzieren eines kollimierten Röntgenstrahls (889);
einen Röntgenstrahlen-Monochromator (330) zum Auswählen von Röntgenstrahlen einer vorbestimmten Energie und einer vorbestimmten Energiebandbreite aus dem kollimierten Röntgenstrahl;
eine Halterung (244) zum Halten eines zu untersuchenden Objekts (240), wobei die Halterung so positioniert ist, dass die Röntgenstrahlen von vorbestimmter Energie und Bandbreite durch das Objekt transmittiert werden; und
einen Detektor (2900) zum Messen der durch das Objekt transmittierten Röntgenstrahlen.

**2.** System nach Anspruch 1, bei welchem der Detektor Folgendes beinhaltet:

einen Detektor zum Messen der Intensität der auf das Objekt einfallenden Röntgenstrahlen; oder

einen Detektor zum Messen der durch das Objekt emittierten RöntgenFluoreszenz, wenn das Objekt den Röntgenstrahlen von vorbestimmter Energie und Bandbreite gegenüber exponiert wird.

3. System nach einem der vorhergehenden Ansprüche, bei welchem jede seitliche Abmessung der mindestens einen der diskreten Mikrostrukturen unter 50 Mikrometern beträgt.

4. System nach einem der vorhergehenden Ansprüche, bei welchem die Vielzahl von diskreten Mikrostrukturen in einer linearen Anordnung entlang einer vorbestimmten Achse angeordnet ist; und die optische Anordnung ebenso entlang der vorbestimmten Achse ausgefluchtet ist.

5. System nach einem der vorhergehenden Ansprüche, bei welchem das erste ausgewählte Material aus der Gruppe ausgewählt ist, bestehend aus: Beryllium, Diamant, Graphit, Silizium, Bornitrid, Siliciumcarbid, Saphir und diamantähnlichem Kohlenstoff.

6. System nach einem der vorhergehenden Ansprüche, bei welchem das zweite ausgewählte Material aus der Gruppe ausgewählt ist, bestehend aus: Aluminium, Titan, Vanadium, Chrom, Mangan, Eisen, Kobalt, Nickel, Kupfer, Gallium, Zink, Yttrium, Zirkon, Molybdän, Niob, Ruthenium, Rhodium, Palladium, Silber, Zinn, Iridium, Tantal, Wolfram, Indium, Cäsium, Barium, Gold, Platin, Blei und Kombinationen und Legierungen hieraus.

7. System nach einem der vorhergehenden Ansprüche, bei welchem eine Untergruppe der Vielzahl von diskreten Mikrostrukturen ein drittes Material beinhaltet, welches aufgrund seiner Röntgenstrahlen-Erzeugungseigenschaften ausgewählt ist.

8. System nach einem der vorhergehenden Ansprüche, bei welchem die Vielzahl von diskreten Mikrostrukturen in einer Weise angeordnet ist, dass durch eine vorbestimmte Anzahl der Vielzahl von diskreten Mikrostrukturen erzeugte Röntgenstrahlen, wenn diese einem Elektronenstrahl vom Elektronenstrahl-Emitter gegenüber ausgesetzt sind, durch eine vorbestimmte der diskreten Mikrostrukturen transmittiert werden, welche aus der Vielzahl von diskreten Mikrostrukturen ausgewählt ist.

9. System nach Anspruch 1, bei welchem der mindestens eine Elektronenstrahl-Emitter eine Vielzahl von Elektronen-Emittern beinhaltet und das mindestens eine Anodentarget eine Vielzahl von Anodentargets in der Weise beinhaltet, dass jeder der Elektronenstrahl-Emitter ausgefluchtet ist, um einen Elektronenstrahl bereitzustellen, um ein entsprechendes Anodentarget zum Erzeugen von Röntgenstrahlen zu bombardieren, und die Anodentargets in einer Weise ausgefluchtet sind, dass die Positionen, an welchen Röntgenstrahlen erzeugt werden, entlang einer vorbestimmten Achse ausgefluchtet sind, und die optische Anordnung ebenso entlang der vorbestimmten Achse ausgefluchtet ist.

10. System nach einem der vorhergehenden Ansprüche, bei welchem die optische Anordnung einen Röntgenstrahlenreflektor (3020, 3030, 3040) mit einer Oberfläche beinhaltet, welche einer quadratischen Fläche entspricht.

11. System nach Anspruch 10, bei welchem die quadratische Fläche aus der Gruppe ausgewählt ist, bestehend aus: einem Sphäroid, einem Ellipsoid, einem Paraboloid, einem Hyperboloid, einem elliptischen Zylinder, einem kreisförmigen Zylinder, einem elliptischen Kegel und einem kreisförmigen Kegel.

12. System nach einem der vorhergehenden Ansprüche, bei welchem die optische Anordnung eine Wolter-Röntgenoptik vom Typ I beinhaltet; oder die vorbestimmte Energiebandbreite unter 10 eV beträgt.

13. System nach einem der vorhergehenden Ansprüche, bei welchem der Röntgenstrahlen-Monochromator ein kanalförmig zugeschnittenes Kristall beinhaltet, welches ein Material beinhaltet, ausgewählt aus der Gruppe, bestehend aus: Silizium, Germanium, Lithiumfluorid und Indiumantimonid.

14. System nach einem der vorhergehenden Ansprüche, bei welchem der Monochromator einen Doppelkristall-Monochromator beinhaltet.

15. System nach einem der vorhergehenden Ansprüche, zudem beinhaltend ein Steuerungssystem (246) zum Koordinieren der Einstellungen des Röntgenstrahlen-Monochromators und der Position und Rotation des Objekts.

## Revendications

1. Système de mesure de structure fine d'absorption de rayons X, comprenant :

une source de rayons X à haute luminosité (80) comprenant :

au moins un émetteur de faisceau d'électrons (11) ; et
au moins une cible d'anode (1100) comprenant :

un substrat (1000) comprenant un premier matériau sélectionné ; et

au moins une structure de génération de rayons X comprenant un second matériau sélectionné pour ses propriétés de génération de rayons X et comprenant une pluralité de microstructures discrètes (700), dans lesquelles chacune de la pluralité de microstructures discrètes est en contact thermique avec le substrat et dans lequel au moins une des microstructures discrètes présente au moins une dimension inférieure à 20 microns ;

un train optique (840) permettant de collecter des rayons X générés par la cible d'anode et de produire un faisceau de rayons X collimaté (889) ;

un monochromateur de rayons X (330) permettant de sélectionner des rayons X d'une énergie prédéterminée et d'une largeur de bande d'énergie prédéterminée à partir du faisceau de rayons X collimaté ;

un système de montage (244) permettant de tenir un objet (240) à étudier, le système de montage étant positionné de sorte que les rayons X d'énergie et largeur de bande prédéterminées soient transmis à travers l'objet ; et

un détecteur (2900) permettant de mesurer les rayons X transmis à travers l'objet.

2. Système selon la revendication 1, dans lequel le détecteur comprend :

un détecteur permettant de mesurer l'intensité des rayons X incidents sur l'objet ; ou

un détecteur permettant de mesurer l'intensité de la fluorescence des rayons X émise par l'objet lorsqu'il est exposé aux rayons X d'énergie et de largeur de bande prédéterminées.

3. Système selon l'une quelconque des revendications précédentes, dans lequel chaque dimension latérale desdites au moins une des microstructures discrètes est inférieure à 50 microns.

4. Système selon l'une quelconque des revendications précédentes, dans lequel la pluralité de microstructures discrètes est agencée dans une rangée linéaire le long d'un axe prédéterminé ; et le train optique est également aligné le long dudit axe prédéterminé.

5. Système selon l'une quelconque des revendications précédentes, dans lequel le premier matériau sélectionné est sélectionné dans le groupe constitué de :

béryllium, diamant, graphite, silicium, nitrure de bore, carbure de silicium, saphir et carbone de type diamant.

6. Système selon l'une quelconque des revendications précédentes, dans lequel le deuxième matériau est sélectionné dans le groupe constitué de : aluminium, titane, vanadium, chrome, manganèse, fer, cobalt, nickel, cuivre, gallium, zinc, yttrium, zirconium, molybdène, niobium, ruthénium, rhodium, palladium, argent, étain, iridium, tantale, tungstène, indium, césium, baryum, or, platine, plomb et combinaisons et alliages correspondants.

7. Système selon l'une quelconque des revendications précédentes, dans lequel un sous-ensemble de la pluralité de microstructures discrètes comprend un troisième matériau choisi pour ses propriétés de génération de rayons X.

8. Système selon l'une quelconque des revendications précédentes, dans lequel la pluralité de microstructures discrètes est disposée, de sorte que les rayons X générés par un nombre prédéterminé de la pluralité de microstructures discrètes lorsqu'ils sont exposés à un faisceau d'électrons provenant de l'émetteur de faisceau d'électrons sont transmis à travers une microstructure prédéterminée des microstructures discrètes sélectionnées parmi la pluralité de microstructures discrètes.

9. Système selon la revendication 1, dans lequel le au moins un émetteur de faisceau d'électrons comprend une pluralité d'émetteurs d'électrons et la au moins une cible d'anode comprend une pluralité de cibles d'anode, de sorte que chaque émetteur de faisceau d'électrons est aligné afin de fournir un faisceau d'électrons permettant de bombarder une cible d'anode correspondante afin de générer des rayons X, et les cibles d'anode sont alignées de sorte que les positions auxquelles les rayons X sont générés sont alignées le long d'un axe prédéterminé et le train optique est également aligné le long dudit axe prédéterminé.

10. Système selon l'une quelconque des revendications précédentes, dans lequel le train optique comprend un réflecteur de rayons X (3020, 3030, 3040) avec une surface correspondant à une surface quadrique.

11. Système selon la revendication 10, dans lequel la surface quadrique est sélectionnée dans le groupe constitué de : une sphère, une ellipse, une parabole, une hyperbole, un cylindre elliptique, un cylindre circulaire, un cône elliptique, et un cône circulaire.

12. Système selon l'une quelconque des revendications précédentes, dans lequel le train optique comprend un optique de rayons X Wolter de type I ; ou la largeur de bande d'énergie prédéterminée est inférieure à 10 eV.

13. Système selon l'une quelconque des revendications précédentes, dans lequel le monochromateur de rayons X comprend un cristal taillé de canal comprenant un matériau sélectionné dans le groupe constitué de : silicium, germanium, fluorure de lithium, et antimoniure d'indium.

14. Système selon l'une quelconque des revendications précédentes, dans lequel le monochromateur comprend un monochromateur à double cristal.

15. Système selon l'une quelconque des revendications précédentes, comprenant en outre un système de commande (246) permettant de coordonner les paramètres du monochromateur de rayons X et la position et la rotation de l'objet.

FIG. 1

Prior Art

FIG. 2

FIG. 3

FIG. 4

FIG. 5

FIG. 6

FIG. 7

FIG. 8

FIG. 9

EP 3 152 554 B1

3020

3010

3050

**FIG. 10**

3040

3030

$F_{e1}$  $F_{h1}$  $F_{h2}$

3030

3040

**FIG. 11**

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011085644 A1
- US 5132997 A
- US 14465816 B
- US 49067214 A
- US 14544191 B

### Non-patent literature cited in the description

- Study of the local order around magnetic impurities in semiconductors for spintronics. **MAURO ROVEZZI.** Condensed Matter. Université Joseph-Fourier, 2009
- **MASAHISA ITO et al.** A Stable In-Laboratory EXAFS Measurement System. *Japanese Journal of Applied Physics,* 01 February 1983, vol. 22 (2), 357-360
- **SHIGEHIKO YAMAMOTO.** Fundamental physics of vacuum electron sources. *Reports on Progress in Physics,* 2006, vol. 69, 181-232